# EUROPÄISCHE PATENTANMELDUNG

(11) **EP 3 598 846 A1**
(43) Veröffentlichungstag der Anmeldung: **22.01.2020**
(21) Anmeldenummer: 18184490.3
(22) Anmeldetag: 19.07.2018
(51) Int. Cl.: H05B 3/26, F01N 3/20, H05B 3/78

(54) **HEIZMODUL**

(71) Anmelder: Magna Steyr Fuel Systems GesmbH, 8261 Sinabelkirchen (AT)
(72) Erfinder: GROSS, Jörg, 50389 Wesseling (DE)
(74) Vertreter: Zangger, Bernd

(57) **Zusammenfassung**

Ein Heizmodul zum Heizen eines Fluids in einem Tank (1), insbesondere zum Heizen von Harnstofflösung, umfassend ein Trägermodul (2) und ein Heizelement (3), wobei das Heizelement (3) zumindest einen Heizdraht (4) auf einem folienförmigen Heizelementträger (5) aufweist, wobei das Trägermodul (2) das Heizelement (3) auf beiden Seiten des folienförmigen Heizelementträgers (5) umgibt, wobei das Trägermodul (2) eine offene Stützstruktur (6) aufweist, so dass abschnittsweise kein Material zwischen dem Heizdraht (4) und der Außenseite des Heizmoduls angeordnet ist und eine Heizmodulanordnung umfassend zumindest zwei solche Heizmodule, sowie eine Tankvorrichtung umfassend zumindest ein solches Heizmodul oder eine solche Heizmodulanordnung.

## Beschreibung

### Gebiet der Erfindung

Die vorliegende Erfindung betrifft ein Heizmodul zum Heizen eines Fluids in einem Tank, insbesondere zum Heizen von Harnstofflösung, eine Heizmodulanordnung, umfassend zumindest zwei solche Heizmodule und eine Tankvorrichtung, umfassend zumindest ein solches Heizmodul oder eine solche Heizmodulanordnung.

### Stand der Technik

SCR-Tanksysteme, insbesondere Hanststofftanks, bevorraten aufgrund immer höher werdender Anforderungen an eine Abgasnachbehandlung in Kraftfahrzeugen immer höhere Füllvolumina, da der Verbrauch flüssiger Harnstofflösung pro gefahrenem Kilometer ansteigt. Um die Versorgung der Abgasnachbehandlung sicher zu stellen werden zunehmend Heizelemente in solchen Tanksystemen verbaut. Bisher wurden, in kleineren Behältern, die Heizelemente in eine Fördereinheit des Behälters integriert. Inzwischen werden auch schon Zusatzheizungen in den Behältern verbaut, die ein solches Heizelement in einer Fördereinheit unterstützen können. Solche Zusatzheizungen können als Flächenheizungen ausgebildet sein, die in der Tankwandung bzw. in Ausbildungen an der Tankwandung befestigt werden können. Zum Schutz von in solchen Flächenheizungen eingesetzten Heizdrähten sind die Heizelemente in Kunststoff gekapselt, insbesondere umspritzt. Durch Verwendung unterschiedlicher Tankformen in verschiedenen Fahrzeugen müssen derartige Zusatzheizungen, also an der Behälterwand befestigbare Heizelemente, jeweils mit passender Geometrie für die jeweilige Tankform ausgebildet werden.

Ein derartige gekapselte Heizvorrichtung ist beispielsweise aus der DE 10 2015 003 098 A1 bekannt.

### Zusammenfassung der Erfindung

Es ist eine Aufgabe der Erfindung, ein Heizmodul und eine Heizmodulanordnung zum Heizen eines Fluids in einem Tank anzugeben, wobei eine effiziente Heizung sichergestellt sein soll und die Heizung einfach an verschiedene Tankgeometrien anpassbar sein soll. Auch soll ein Tank mit einer derartigen effizienten Heizung angegeben werden.

Die Lösung der Aufgabe erfolgt durch ein Heizmodul zum Heizen eines Fluids in einem Tank, insbesondere zum Heizen von Harnstofflösung, umfassend ein Trägermodul und ein Heizelement, wobei das Heizelement zumindest einen Heizdraht auf einem folienförmigen Heizelementträger aufweist, wobei das Trägermodul das Heizelement auf beiden Seiten des folienförmigen Heizelementträgers umgibt, wobei das Trägermodul eine offene Stützstruktur aufweist, so dass abschnittsweise kein Material zwischen dem Heizdraht und der Außenseite des Heizmoduls angeordnet ist.

Erfindungsgemäß wird ein im Wesentlichen plattenförmiges, also flächiges, Heizmodul angegeben, welches im Kern einen flachen, im Wesentlichen folienförmigen Heizelementträger aufweist, beispielsweise ein flexibles Trägergeflecht. Auf dem Heizelementträger sind Heizdrähte oder zumindest ein Heizdraht zur Widerstandsheizung des Fluids angeordnet. Diese Heizelemente werden getragen und gestützt durch die Heizelemente umgebende Trägermodule. Diese Trägermodule weisen eine offene Struktur auf, so dass die folienförmigen Heizelementträger zwar ausreichend gestützt sind, der Heizdraht aber dennoch zumindest abschnittsweise freien Zugang nach außen haben. Hierdurch kann ein erheblich verbesserter Wärmetransfer zum Fluid erreicht werden und somit besonders effizient geheizt werden. Die Heizmodule verwenden daher keinerlei Umspritzung oder sonstige Einbettung in einen Kunststoff oder ähnliches Material, wie bei bisherigen vergleichbaren Heizungen üblich. Zudem kann durch die offene Ausbildung der Stützstruktur, ohne Einkapselungen des Heizelementträgers sowie des Heizelementes, dieses einfacher in ein Trägermodul eingelegt und ausgetauscht werden. Trägermodul und Heizelement können getrennt hergestellt werden und zu einem späten Zeitpunkt im Herstellungsprozess, je nach Bedarf, insbesondere für verschiedene Tankformen und -größen, auch beispielsweise mehrere Trägermodule mit gemeinsamen oder einzelnen Heizelementen ausgestattet werden und in einem Tank verbaut werden.

Bevorzugt ist das Trägermodul dazu ausgebildet, leicht geöffnet werden zu können, so dass ein Heizelement in das Trägermodul eingelegt oder vom Trägermodul entfernt werden kann.

Das Trägermodul kann an einem ersten Ende insbesondere ein Scharnier zum Auf- und Zuklappen des Trägermoduls aufweisen, insbesondere ein Filmscharnier. Das Trägermodul kann dann insbesondere aus zwei Trägermodulhälften bestehen, die über das Scharnier verbunden sind.

Vorzugsweise weist die offene Stützstruktur des Trägermoduls Positionierhilfen zur korrekten Positionierung des Heizelements im Trägermodul auf, insbesondere Positionierdome. Die Positionierhilfe, insbesondere Positionierdom, kann so ausgebildet sein, dass damit nicht nur das Heizelement in dessen Position festgelegt ist, sondern auch die Trägermodulhälften des Trägermoduls dadurch aneinander fixiert werden, insbesondere miteinander verklipst werden.

Das Trägermodul weist vorzugsweise zumindest eine Verklipsungsgeometrie, beispielsweise eine nutartige Aufnahmevertiefung, auf, die dazu ausgebildet ist, das Trägermodul mit einer entsprechenden Verklipsungsgegengeometrie des Tanks, beispielsweise einem zweiseitig umgreifenden Element, zu verklipsen.

Die Verklipsungsgeometrie kann insbesondere am zweiten Ende des Trägermoduls, das dem ersten Ende mit dem Scharnier zum Auf- und Zuklappen des Trägermoduls entgegengesetzt ist, ausgebildet sein.

Eine Heizmodulanordnung kann dann zumindest zwei Heizmodule wie zuvor beschrieben umfassen, wobei die zwei Trägermodule der Heizmodule über ein flexibles Gelenk miteinander verbunden sind. Dabei kann das flexible Gelenk einstückig mit einem oder mit beiden Trägermodulen ausgebildet sein oder durch ein separates, insbesondere in die zwei Trägermodule steckbares, Bauteil gebildet sein. Ist das Gelenk einstückig an einem Trägermodul ausgebildet, kann die zweite Seite des Gelenks in das zweite Trägermodul gesteckt sein. Das Gelenk kann sich beispielsweise im Wesentlichen über die gesamte Höhe der Heizmodule - normal auf eine Tankwand zur Befestigung der Module - erstrecken.

Das Gelenk kann daher vorzugsweise an einem dritten Ende des Trägermoduls angeordnet sein, das seitlich am Trägermodul, zwischen dem ersten Ende und dem zweiten Ende, verläuft.

Eine Tankvorrichtung kann erfindungsgemäß einen Tank umfassen, insbesondere einen Harnstofftank, und zumindest ein Heizmodul oder eine Heizmodulanordnung wie zuvor beschrieben. Dabei kann der Tank eine Verklipsungsgegengeometrie aufweisen und das Heizmodul oder die Heizmodulanordnung in Einbaulage vertikal oder horizontal in der Verklipsungsgegengeometrie des Tanks eingeklipst sein.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines Heizelements eines erfindungsgemäßen Heizmoduls.
- Fig. 2: ist eine schematische Darstellung eines Trägermoduls eines erfindungsgemäßen Heizmoduls.
- Fig. 3: ist eine schematische Darstellung von drei erfindungsgemäßen Heizmodulen und von einer erfindungsgemäßen Heizmodulanordnung.
- Fig. 4: ist eine schematische Darstellung der Heizmodule und der Heizmodulanordnung gemäß Fig. 3, jedoch von oben.
- Fig. 5: ist eine schematische Darstellung der Heizmodule und der Heizmodulanordnung gemäß Fig. 3, jedoch mit einem Teil eines Tanks und somit während der Herstellung einer erfindungsgemäßen Tankvorrichtung.

### Detaillierte Beschreibung der Erfindung

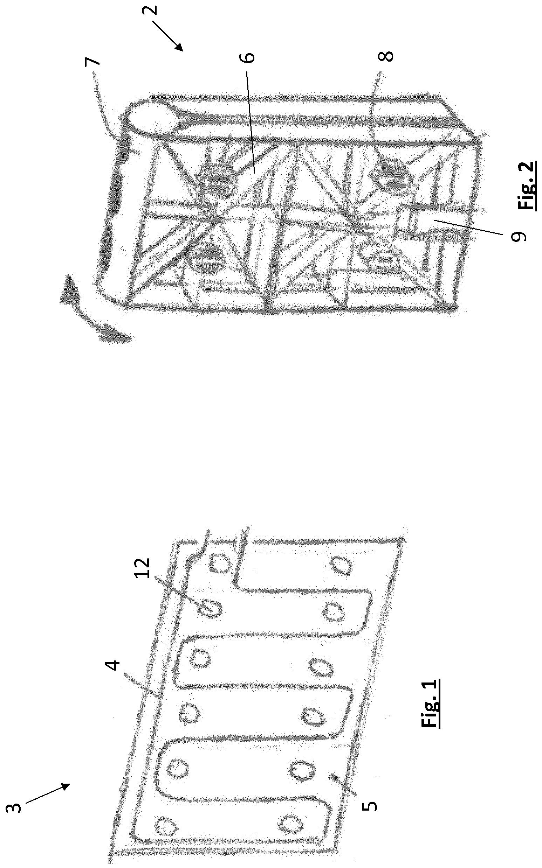

In Fig. 1 ist ein Heizelement eines erfindungsgemäßen Heizmoduls dargestellt. Das Heizmodul weist zumindest einen Heizdraht 4 auf einem folienförmigen Heizelementträger 5 auf. Der Heizelementträger 5 kann durch ein flexibles Trägergeflecht gebildet sein. Der Heizdraht 4 kann insbesondere mäanderförmig auf der Fläche des Heizelementträgers 5 verlaufen und kann seitlich aus dem Heizelementträger 5 herausgeführt sein, zum Anschluss an eine Spannungsquelle. Der Heizdraht 4 kann ein isolierter Draht sein.

Der Heizelementträger 5 weist zudem Positionieröffnungen 12 in Form von mehreren runden Durchbrüchen auf. Die Positionieröffnungen 12 dienen der Positionierung des Heizelementträgers 5 in einem Trägermodul 2.

Fig. 2 stellt ein Trägermodul 2 eines erfindungsgemäßen Heizmoduls dar.

Das Trägermodul 2 ist dazu ausgebildet, ein Heizelement 3 auf beiden Seiten des folienförmigen Heizelementträgers 5 zu umgeben. Das Trägermodul 2 ist in der Form eines Klapprahmens ausgebildet. Es weist zwei Seitenteile auf, die jeweils eine offene Stützstruktur 6 ausbilden. Offen ist die Struktur insofern, als abschnittsweise kein Material zwischen dem Heizdraht 4 und der Außenseite des Heizmoduls angeordnet ist. Dies schließt die Möglichkeit ein, dass der Heizdraht 4 selbst eine übliche Drahtisolierung aufweist. Die Stützstruktur ist in der Art einer Fachwerkstruktur durch Verstrebungen gebildet. Zwischen den Verstrebungen befinden sich Öffnungen, ist also das Heizelement 3 frei zugänglich.

Das Trägermodul 2 weist an einem ersten Ende - in der Fig. 2 oben dargestellt - ein Scharnier 7 zum Auf- und Zuklappen des Trägermoduls 2 auf - wie durch einen Doppelpfeil in Fig. 2 angedeutet.

Bei Aufgeklapptem Trägermodul 2 kann ein Heizelement 3 in das Trägermodul 2 eingelegt oder vom Trägermodul 2 entfernt werden.

Die offene Stützstruktur 6 des Trägermoduls 2 bildet auch Positionierhilfen 8 aus, nämlich Positionierdome, zur korrekten Positionierung des Heizelements 3 im Trägermodul 2. Die Positionieröffnungen 12 eines Heizelements 3 können bei korrekter Lage um die Positionierdome 8 herum angeordnet sein.

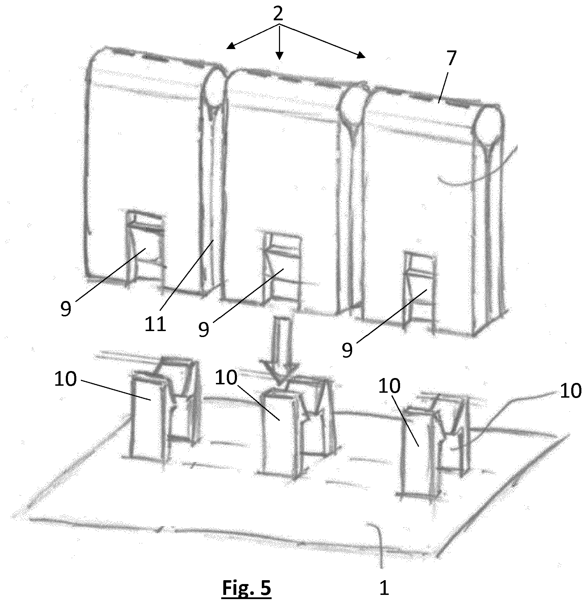

Das Trägermodul 2 weist eine Verklipsungsgeometrie 9, nämlich eine Aufnahmevertiefung auf, die dazu ausgebildet ist, das Trägermodul 2 mit einer entsprechenden Verklipsungsgegengeometrie 10 des Tanks 1 zu verklipsen - siehe hierzu insbesondere Fig. 5. Die Verklipsungsgeometrie 9 kann einen Rasthaken umfassen.

Die Verklipsungsgeometrie 9 ist am zweiten Ende des Trägermoduls 2, das dem ersten Ende mit dem Scharnier 7 zum Auf- und Zuklappen des Trägermoduls entgegengesetzt ist, ausgebildet, das ist in Fig. 2 unten.

Mehrere Trägermodule 2 von mehreren Heizmodulen können mittels ihrer Verklipsungsgeometrien 9 an einer Wand eines Tanks 1 befestigt sein (siehe Fig. 5). Die Heizmodule können untereinander verbunden sein oder nicht verbunden sein.

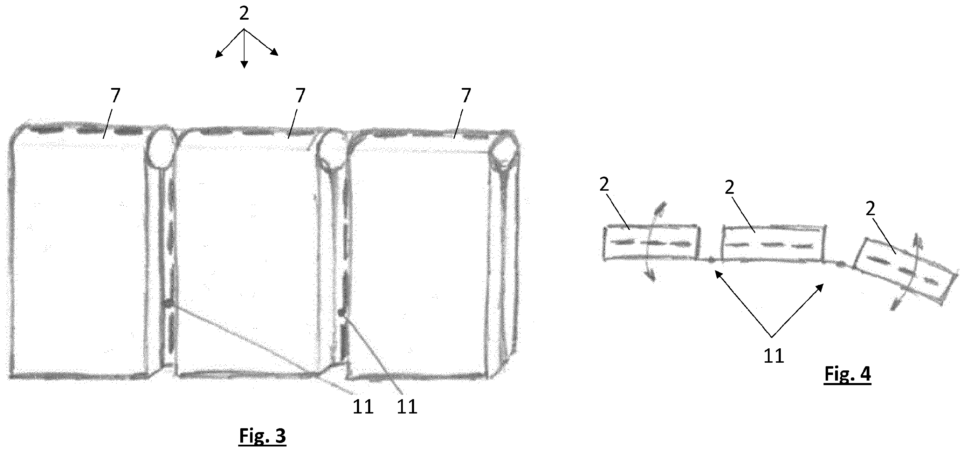

Fig. 3 stellt eine Heizmodulanordnung dar, bei welcher drei Trägermodule 2 über jeweils ein flexibles Gelenk 11 miteinander verbunden sind. Das flexible Gelenk 11 kann einstückig mit einem oder mit beiden Trägermodulen 2 ausgebildet sein, insbesondere gemeinsam mit dem oder den Trägerbauteilen in einem gemeinsamen Spritzgussvorgang hergestellt sein. Das Gelenk 11 kann auch ein separates Bauteil, insbesondere Steckbauteil, sein.

Das Gelenk 11 ist an einem dritten Ende des Trägermoduls 2 angeordnet, das seitlich am Trägermodul 2, zwischen dem ersten Ende und dem zweiten Ende, verläuft.

Das Gelenk 11 kann sich beispielsweise über einen Großteil der Seitenfläche des Klapprahmens des Trägermoduls 2 erstrecken.

Fig. 5 stellt drei Heizmodule bzw. eine Heizmodulanordnung mit einem Teil eines Tanks 1, nämlich einem Teil einer Tankwandung, dar und zeigt wie, insbesondere während der Herstellung der Tankvorrichtung, die Heizmodule in den Tank eingesteckt werden können.

Der Tank 1 weist mehrere Verklipsungsgegengeometrien 10 auf, in welche die Verklipsungsgeometrien 9 der Heizmodule eingeschoben und eingeklipst werden können. Die Verklipsungsgegengeometrien 10 können als Vorstände mit Rasthaken ausgebildet sein. Der Verlauf der Verklipsungsgegengeometrien 10 kann dabei die Anordnung der Heizmodule im Tank bestimmen. Die Heizmodule können insbesondere vertikal oder horizontal im Tank 1 verbaut werden.

### Bezugszeichenliste

- 1: Tank
- 2: Trägermodul
- 3: Heizelement
- 4: Heizdraht
- 5: Heizelementträger
- 6: offene Stützstruktur
- 7: Scharnier
- 8: Positionierhilfe
- 9: Verklipsungsgeometrie
- 10: Verklipsungsgegengeometrie
- 11: Gelenk
- 12: Positionieröffnungen

## Patentansprüche

1. Heizmodul zum Heizen eines Fluids in einem Tank (1), insbesondere zum Heizen von Harnstofflösung, umfassend ein Trägermodul (2) und ein Heizelement (3), wobei das Heizelement (3) zumindest einen Heizdraht (4) auf einem folienförmigen Heizelementträger (5) aufweist, wobei das Trägermodul (2) das Heizelement (3) auf beiden Seiten des folienförmigen Heizelementträgers (5) umgibt, **dadurch gekennzeichnet, dass** das Trägermodul (2) eine offene Stützstruktur (6) aufweist, so dass abschnittsweise kein Material zwischen dem Heizdraht (4) und der Außenseite des Heizmoduls angeordnet ist.

2. Heizmodul nach Anspruch 1,
**dadurch gekennzeichnet, dass** das Trägermodul (2) dazu ausgebildet ist, leicht geöffnet werden zu können, so dass ein Heizelement (3) in das Trägermodul (2) eingelegt oder vom Trägermodul (2) entfernt werden kann.

3. Heizmodul nach Anspruch 2,
**dadurch gekennzeichnet, dass** das Trägermodul (2) an einem ersten Ende ein Scharnier (7) zum Auf- und Zuklappen des Trägermoduls (2) aufweist.

4. Heizmodul nach zumindest einem der vorhergehenden Ansprüche, **dadurch gekennzeichnet, dass** die offene Stützstruktur (6) des Trägermoduls (2) Positionierhilfen (8), zur korrekten Positionierung des Heizelements (3) im Trägermodul (2) aufweist.

5. Heizmodul nach zumindest einem der vorhergehenden Ansprüche, **dadurch gekennzeichnet, dass** das Trägermodul (2) zumindest eine Verklipsungsgeometrie (9) aufweist, die dazu ausgebildet ist, das Trägermodul (2) mit einer entsprechenden Verklipsungsgegengeometrie (10) des Tanks (1) zu verklipsen.

6. Heizmodul nach den Ansprüchen 3 und 5,
**dadurch gekennzeichnet, dass** die Verklipsungsgeometrie (9) am zweiten Ende des Trägermoduls (2), das dem ersten Ende mit dem Scharnier (7) zum Auf- und Zuklappen des Trägermoduls entgegengesetzt ist, ausgebildet ist.

7. Heizmodulanordnung, umfassend zumindest zwei Heizmodule nach einem der vorhergehenden Ansprüche,
**dadurch gekennzeichnet, dass** die zwei Trägermodule (2) über ein flexibles Gelenk (11) miteinander verbunden sind, wobei das flexible Gelenk (11) einstückig mit einem oder mit beiden Trägermodulen (2) ausgebildet ist oder durch ein separates, insbesondere in die zwei Trägermodule (2) steckbares, Bauteil gebildet wird.

8. Heizmodulanordnung nach Anspruch 7, umfassend zumindest zwei Heizmodule nach Anspruch 6,
**dadurch gekennzeichnet, dass** das Gelenk (11) an einem dritten Ende des Trägermoduls (2) angeordnet ist, das seitlich am Trägermodul (2), zwischen dem ersten Ende und dem zweiten Ende, verläuft.

9. Tankvorrichtung umfassend einen Tank (1), insbesondere Harnstofftank, und zumindest ein Heizmodul nach einem der Ansprüche 1 bis 6 oder eine Heizmodulanordnung nach einem der Ansprüche 7 bis 8,
**dadurch gekennzeichnet, dass** der Tank (1) eine Verklipsungsgegengeometrie (10) aufweist und das Heizmodul oder die Heizmodulanordnung in Einbaulage vertikal oder horizontal in der Verklipsungsgegengeometrie (10) des Tanks (1) verklipst ist.
